# EUROPEAN PATENT SPECIFICATION

(11) **EP 4 368 870 B1**
(45) Date of publication and mention of the grant of the patent: **30.04.2025**
(21) Application number: 24166542.1
(22) Date of filing: 19.03.2020
(51) Int. Cl.: F16L 33/24, F16L 47/16, G02B 6/46, G02B 6/44, H02G 3/04, H02G 3/06

(54) **PROTECTIVE PLASTIC PIPE END FITTING SYSTEM AND METHOD**
SCHUTZKUNSTSTOFFROHRENDMONTAGESYSTEM UND -VERFAHREN
SYSTÈME ET PROCÉDÉ DE FIXATION D'EXTRÉMITÉ DE TUYAU EN PLASTIQUE PROTECTEUR

(30) Priority: 29.03.2019 NL 2022841
(43) Date of publication of application: 15.05.2024
(62) Divisional of application: 20714299.3
(73) Proprietor: Filoform B.V., 4191 PH Geldermalsen (NL)
(72) Inventor: IPENBURG, Willem, 4191 PH GELDERMALSEN (NL)
(74) Representative: EP&C

(56) References cited:
- EP-A1- 1 818 702
- EP-A1- 1 855 043
- DE-A1- 102012 105 067
- FR-A1- 2 982 039
- FR-A1- 3 004 543
- FR-A1- 3 047 809

## Description

The present invention relates to the field of protective plastic pipe end fitting systems that are adapted to be mounted at an end portion of a protective plastic pipe into which at least one elongated object passes. For example, the elongated object is a cable, e.g. an electric power cable and/or communication cable, e.g. an optical fibre cable. In another example the elongated object is a pipe, e.g. a smaller diameter plastic pipe, for example a smaller diameter protective plastic pipe through which a cable passes. These fitting systems provide a seal that prevents ingress of fluid, e.g. water, e.g. ground water, or gas, or other matter, into and/or out of the protective plastic pipe. In these fitting members the sealing member is clamped onto the elongated object and thereby may also provide some strain relief for the elongated object.

For example, in DE102012105067 a prior art protective plastic pipe end fitting system is disclosed. Herein the fitting system comprises an axially split housing that is composed of two rigid plastic housing parts and a compressible sealing member. The housing delimits a pipe bore that is adapted to receive therein an end portion of a protective plastic pipe. The pipe bore has an insertion end for the axial insertion of the end portion of the protective pipe. The housing further delimits a sealing member receiving chamber that is adapted to receive therein the sealing member in a non-compressed condition. This chamber is arranged in line with the pipe bore and opposite the insertion end of the pipe bore. The compressible sealing member has an annular sealing member body with a pipe contacting end face and a counter end face opposite the pipe contacting end face. The sealing member body has at least one axial passage therein, said at least one axial passage being configured to receive a cable passing there through. The annular sealing member body is split to allow for mounting the sealing member laterally onto a cable that extends from the end portion of the protective pipe into which the cable has already been inserted. The lower housing part can then also be mounted over the cable and the sealing member, so that the sealing member is received in the lower half of the chamber. Then the upper housing part is fitted on the lower housing part to complete the housing of the fitting system. Then the fitting system is slid towards the protective pipe so that the protective pipe enters the pipe bore via the insertion end thereof. In the housing, in this example in the lower housing part thereof, the housing has a least one first engaged helical thread creating portion that is arranged in the pipe bore. This first engaged helical thread creating portion is first into engagement with the end portion of the protective plastic pipe upon said entry of the protective plastic pipe into the pipe bore via the insertion end thereof. The first engaged helical thread creating portion is adapted to create a helical thread having a lead into the exterior of the protective plastic pipe upon screwing the fitting system onto the end portion of the protective plastic pipe, so that the end face of the protective plastic pipe comes into contact with the pipe contacting end face of the sealing member. Upon continuing said screwing the compressible sealing member becomes compressed thereby narrowing the one axial passage therein and sealing onto the cable passing there through and providing strain relief for the cable, as well as sealing onto the end of the protective plastic pipe.

The present invention aims to provide an improved protective plastic pipe end fitting system. In particular, the invention aims to allow for more efficiency when installing the fitting system, e.g. reducing the manual efforts of the installation engineer performing the installation of the fitting system.

The invention relates to a protective plastic pipe end fitting system according to the preamble of claim 1, wherein the first engaged helical thread creating portion has an asymmetric cross-section defined by a low inclination stab flank, a crest ridge, and a steep load flank.

In an embodiment, the load flank is at an angle between 0 and 15 degrees relative to the plane perpendicular to the axis of the pipe bore.

In an embodiment, the stab flank is at an angle between 45 and 75 degrees relative to the plane perpendicular to the axis of the pipe bore.

The fitting system of the invention may also have one or more of the other features as discussed herein, e.g. the feature of the characterizing portion of clause 1 and/or of any of the subclaims.

The invention also relates to a method according to claim 12 for mounting a protective plastic pipe end fitting system at an end portion of a protective plastic pipe into which at least one elongated object passes, the fitting system being according to the fourth aspect of the invention. For example, depending on the exact dimensions and/or rigidity of the plastic pipe, the person performing the installation will push the end of the plastic pipe initially beyond the first engaged helical thread creating portion, e.g. directly into engagement with the sealing member. So, in the latter situation, no screwing motion at all will be required to establish initial contact between the pipe end face and the sealing member. Then, for compression of the sealing member to the desired degree, the person will perform the screw motion as discussed herein.

It will be appreciated that the invention can be readily integrated in the systems according to the second and/or third aspect of the disclosure.

A first aspect of the present disclosure provides a protective plastic pipe end fitting system adapted to be mounted at an end portion of a protective plastic pipe into which at least one elongated object, e.g. a cable or pipe, passes. Herein the first engaged helical thread creating portion is arranged within an axial distance from the non-compressed sealing member received in the sealing member receiving chamber that is at most 2.5 leads long. Hereby screwing the protective plastic pipe into contact with the non-compressed sealing member requires at most 2.5 turns or revolutions. This allows for rapid and comfortable installation as the number of turns required for screwing is significantly reduced. Herein, it is understood that the protective plastic pipe has an end face that is perpendicular to the pipe axis, as is commonly prescribed for the installation of such systems.

In an embodiment, the axial distance between the first engaged helical thread creating portion and the non-compressed sealing member is between 0.5 and 1.5 leads long. Preferably, this distance is about one lead allowing the protective pipe to contact the pipe contacting end face of the sealing member after screwing the fitting system onto the end portion over about one full turn.

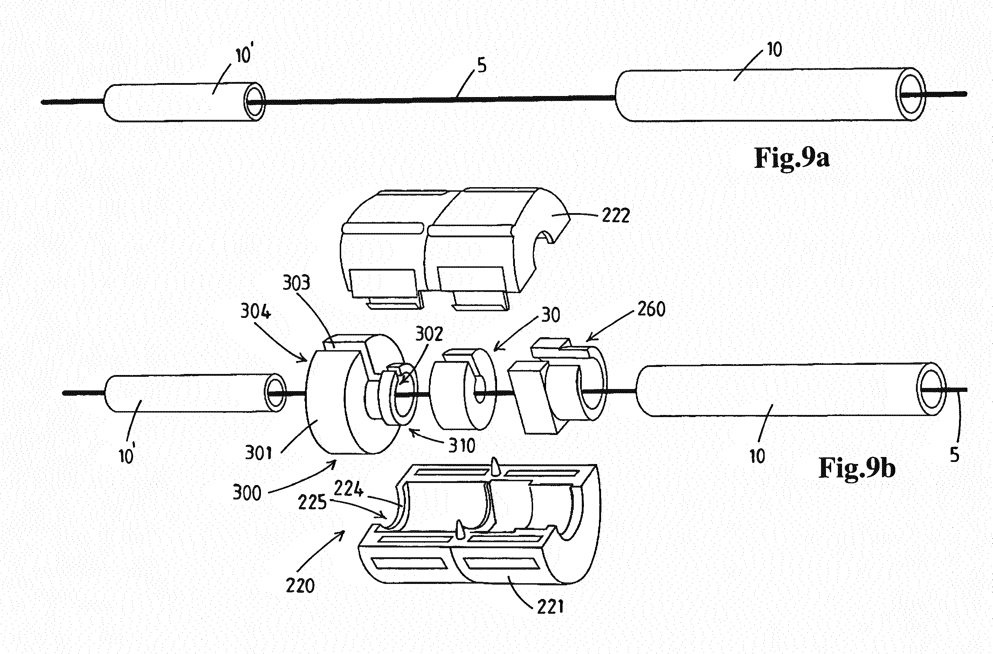

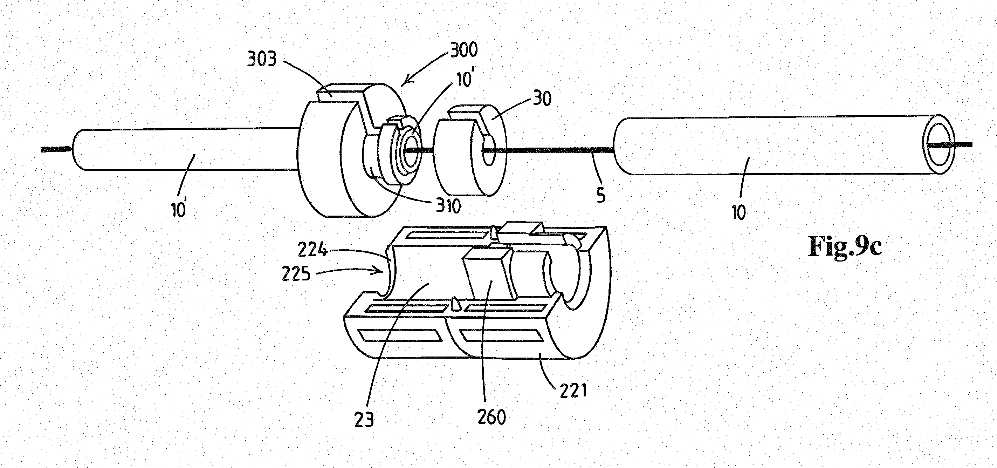

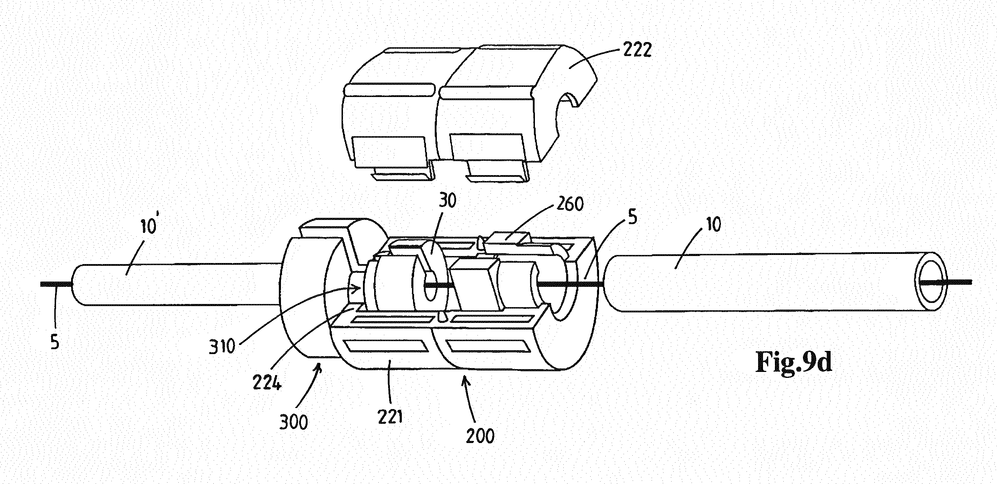

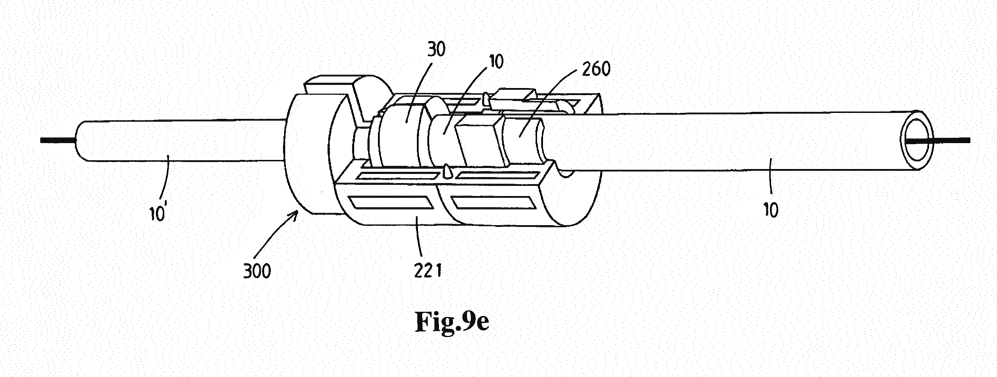

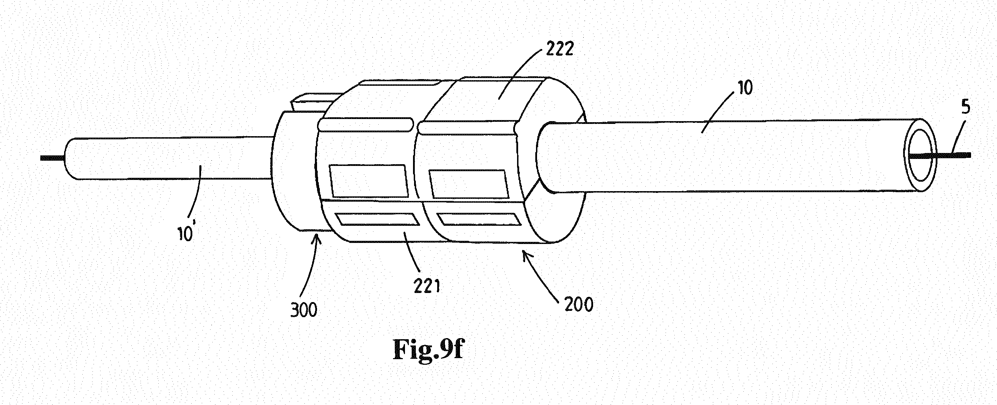

Once the contact between the end portion of the protective pipe and the sealing member has been established a further screwing is required to properly compress the sealing member and cause the desired sealing effect. In embodiments, the desired sealing effect entails that the axial passage in the sealing member becomes increasingly smaller and the sealing member sealingly engages on the elongated object, e.g. cable or pipe, passing through the axial passage in the sealing member. In other embodiments, as will be explained with reference to an example shown in figure 9, the fitting system is configured to sealingly connect two protective pipes with an elongated object extending in both of said pipes and passing through the respective axial passage in the sealing member. The sealing member is in said embodiments compressed between the ends of the two protective pipes, so providing for a desired sealing effect. For example, a further screwing for said compression of the sealing member requires at least an additional half turn, e.g. between a half turn and four full turns.

In embodiments, the axial distance between the insertion end of the pipe bore and the first engaged helical thread creating portion is at least two leads, e.g. between three and ten leads, in order to provide reliable support for the fitting system on the end portion and guidance for the end portion during mounting of the fitting system.

In an embodiment, the first engaged helical thread creating portion has a triangular cross section. For example, the first engaged helical thread creating portion has a cross section defined by a stab flank, a crest ridge, and a load flank, wherein the crest ridge is defined by an apex where the stab flank adjoins the load flank and wherein the crest ridge extends over a segment of a helix. In an embodiment, not according to the invention, the stab flank and the load flank are at the same angle relative to a plane perpendicular to the axis of the pipe bore, resulting in a symmetrical cross-section of the thread creating portion.

In another embodiment, according to the invention, the first engaged helical thread creating portion has an asymmetric cross-section defined by a low inclination stab flank, a crest ridge, and a steep load flank. Herein the load flank is steeper relative to a plane perpendicular to the axis of the pipe bore than the stab flank. The crest ridge is defined by an apex where the stab flank adjoins the load flank. The crest ridge extends over a segment of a helix. In an embodiment, the load flank is at an angle between 0 and 15 degrees relative to the plane perpendicular to the axis of the pipe bore. In an embodiment, the stab flank is at an angle between 45 and 75 degrees relative to the plane perpendicular to the axis of the pipe bore. In embodiment, the load flank could have a slight negative angle, so directed in the same direction relative to said plane as the stab flank.

The provision of the asymmetric cross-section offers several advantages.

For example, the pull out resistance for the plastic pipe is increased compared to an embodiment having a symmetric triangular thread shape.

For example, the compressive force on the sealing member as exerted by the pipe end portion can be higher than with the symmetric triangular thread shape.

For example, depending on the exact dimensions and/or rigidity of the plastic pipe, the person performing the installation may succeed in pushing the end of the plastic pipe initially beyond the first engaged helical thread creating portion, e.g. directly into engagement with the sealing member. So, in the latter situation, no screwing motion at all will be required to establish initial contact between the pipe end face and the sealing member. Then, for compression of the sealing member to the desired degree, the person will perform the screw motion as discussed herein.

In an embodiment, the housing is a one-part housing having a single rigid plastic elongated housing part, e.g. of transparent rigid plastic. Herein the elongated housing part forms the pipe bore with the insertion end thereof at one axial end of the housing part. The elongated housing part also forms the lateral opening adjoining the pipe bore. The elongated housing part has an end wall at another axial end of the housing part, which end wall is provided with laterally open passage therein for the elongated object. The housing also delimits a laterally open sealing member receiving chamber that is arranged between the end wall and the pipe bore.

In another embodiment, the housing is a two-part housing having a first semi-circular cross-section housing part and a second semi-circular cross-section housing part. Herein at least one, preferably each, of the first and second housing parts is provided a respective one first engaged helical thread creating portion.

For example, first and second semi-circular cross-section housing parts have cooperating male and female connector portions along longitudinal edges of the housing parts. Or, for example, the first and second semi-circular cross-section housing parts are connectable along longitudinal edges of the housing parts by means of connectors members of the fitting system, for example the first and second semi-circular cross-section housing parts each having connector ribs protruding outwards along the longitudinal edges thereof and the connector members being adapted to slide over two adjoining connector ribs.

In yet another embodiment, the housing is a three-part housing having a first outer housing part and a second outer housing part as well as an exchangeable thread creating housing part. Herein, the first and second outer housing parts delimit a receiving chamber for exchangeable mounting therein of the thread creating housing part. The creation of the thread may involve a cutting into the exterior of the plastic protective pipe and/or an indenting of the exterior of the plastic protective pipe. This thread creating housing part has a body having an axial length, a protective plastic pipe insertion end, and an opposed second axial end, wherein said body forms the pipe bore and has a lateral opening adjoining the pipe bore. Herein, the thread creating housing part is provided with said at least one first engaged helical thread creating portion arranged in the pipe bore.

In an embodiment, the receiving chamber for exchangeable mounting therein of the thread creating housing part on the one hand and the body of the thread creating housing part on the other hand have cooperating form-fit formations embodied so that the housing only allows for mounting the thread creating housing part with the insertion end thereof facing the protective plastic pipe end of the housing.

In an embodiment, the three-part housing fitting system comprises a first exchangeable thread creating housing part and comprises a second exchangeable thread creating housing part, wherein the first exchangeable thread creating housing part is embodied to receive end portion of a first outer diameter protective tube and wherein the second exchangeable thread creating housing part is embodied to receive end portion of a second outer diameter protective tube, the first outer diameter being different than the second outer diameter, wherein each of the first and second exchangeable thread creating housing parts are configured to be received in the receiving chamber delimited by the first and the second outer housing parts.

In an embodiment, the fitting system is provided with two first engaged helical thread creating portions that are arranged to create a double start thread in the exterior of the protective tube. In another embodiment, the fitting system has just one first engaged helical thread creating portion.

In an embodiment, the chamber receiving the annular sealing member has a tapered section remote from the pipe bore and a non-tapered section in which the annular sealing member in non-compressed condition is received, so that upon further screwing the protective pipe urges the sealing member into the tapered section of the chamber thereby causing enhanced compression of the sealing member, at least onto the one or more elongated objects, e.g. cables or smaller diameter pipes, passing through the sealing member.

The present invention also relates to an arrangement wherein an elongated object passes into a protective plastic tube, wherein a fitting system as described herein has been mounted to provide a seal that prevents transfer of fluid, e.g. water and/or gas, or other matter, e.g. dirt, into and/or out of the protective plastic pipe.

A second aspect of the disclosure relates to a protective plastic pipe end fitting system,
wherein the housing is a three-part housing having a first outer housing part and a second outer housing part as well as an exchangeable thread creating housing part,
wherein the first and second outer housing parts delimit a receiving chamber for exchangeable mounting therein of the thread creating housing part,
wherein the thread creating housing part has a body having an axial length, a protective plastic pipe insertion end, and an opposed second axial end, wherein said body forms the pipe bore and has a lateral opening adjoining the pipe bore,
wherein the thread creating housing part is provided with said at least one first engaged helical thread creating portion arranged in the pipe bore.

In an embodiment of the second aspect of the disclosure the receiving chamber for exchangeable mounting therein of the thread creating housing part on the one hand and the body of the thread creating housing part on the other hand have cooperating form-fit formations embodied so that the housing only allows for mounting the thread creating housing part with the insertion end thereof facing the protective plastic pipe end of the housing.

In an embodiment of the second aspect of the disclosure, the fitting system comprises a first exchangeable thread creating housing part and comprises a second exchangeable thread creating housing part, wherein the first exchangeable thread creating housing part is embodied to receive end portion of a first outer diameter protective tube and wherein the second exchangeable thread creating housing part is embodied to receive end portion of a second outer diameter protective tube, the first outer diameter being different than the second outer diameter, wherein each of the first and second exchangeable thread creating housing parts are configured to be received in the receiving chamber delimited by the first and the second outer housing parts. It will be appreciated that the system could comprise more than two different exchangeable thread creating housing parts, e.g. to deal with even more different diameters of the plastic pipe.

In an embodiment of the second aspect of the disclosure, the fitting system comprises a first exchangeable thread creating housing part and comprises a second exchangeable thread creating housing part, wherein the first and second exchangeable thread creating housing parts have a different embodiment of the thread creating portion, e.g. the one having a symmetric cross-section thread creating portion and the other having an asymmetric cross-section thread creating portion, e.g. both the first and the second exchangeable thread creating housing part being embodied to receive an end portion of a first outer diameter protective tube. For example, the symmetric thread creating portion is preferred for use with rigid plastic pipe and the asymmetric thread creating portion is preferred for a softer or more elastic plastic protective pipe.

The fitting system of the second aspect of the disclosure may also have one or more of the other features as discussed herein.

The second aspect of the disclosure also relates to a method for mounting a protective plastic pipe end fitting system at an end portion of a protective plastic pipe into which at least one elongated object passes, the fitting system being according to the second aspect of the disclosure.

A third aspect of the disclosure relates to a protective plastic pipe end fitting system,
wherein the fitting system is configured to interconnect a first protective plastic pipe and a second protective plastic pipe with at least one elongated object extending in both of said first and second protective plastic pipes and passing through a respective axial passage in the sealing member,
wherein the fitting system further comprises a second pipe connector part, said second pipe connector part having a body delimiting a second pipe bore that is laterally open allowing to place the second pipe connector part over the elongated object, wherein the second pipe bore is adapted to axially introduce therein an end portion of a second protective plastic pipe via an insertion end of the second pipe bore, wherein the second pipe connector part is provided with a which helical thread creating portion that is adapted to create a helical thread having a lead into the exterior of the second protective plastic pipe upon screwing the second pipe connector part onto the introduced end portion of the second protective plastic pipe,
and wherein the housing of the fitting system on the one hand and the second pipe connector part on the other hand are provided with cooperating connector members, that are configured to connect the housing to the second pipe connector part which has already been screwed onto the second protective plastic pipe,
and wherein the sealing member and respective sealing member chamber in the housing are embodied such that in connected state of the housing and the second pipe connector part an end face of the second protective pipe is directed to a second pipe contacting end face of the sealing member, so that upon screwing the fitting system in said connected state onto the end portion of the first protective plastic pipe the end face of said first protective plastic pipe comes into contact with the pipe contacting end face of the sealing member, wherein, upon continuing said screwing the compressible sealing member becomes compressed between the end faces of the first and second protective plastic pipes.

In an embodiment of the third aspect of the disclosure, the second pipe connector part is provided with a flanged protrusion that extends from the body thereof opposite the insertion end of the second pipe bore, wherein said flanged protrusion is configured to be laterally received by a laterally open passage in an end wall of a housing part so as to establish a connection between the housing and the second pipe connector part.

The fitting system of the third aspect of the disclosure may also have one or more of the other features as discussed herein.

It will be appreciated that the third aspect of the disclosure can be readily integrated in a system according to the second aspect of the disclosure.

The third aspect of the disclosure also relates to a method for interconnecting a first protective plastic pipe and a second protective plastic pipe with at least one elongated object extending in both of said first and second protective plastic pipes, wherein use is made of a fitting system being according to the third aspect of the disclosure.

The invention and aspects thereof will now be described with reference to the drawings. In the drawings:
Figs. 1a - d illustrate the mounting of an exemplary embodiment of a protective plastic pipe end fitting system,
Figs. 2a - d illustrate the interaction of the end portion of the protective pipe and the first engaged helical thread creating portion of the example of figure 1,
Fig. 2e illustrates an asymmetric embodiment of the thread creating portion of the inventive fitting system,
Figs. 3a - f illustrate the mounting of another exemplary embodiment of a protective plastic pipe end fitting system,
Figs. 4a -c illustrate a single-part housing embodiment of the inventive fitting system,
Figs. 5a - c illustrate a two-part housing embodiment of the inventive fitting system,
Figs. 6a - f illustrate the mounting of the fitting system of figures 5a - d,
Figs. 7a - d illustrate a three-part housing embodiment of the inventive fitting system,
Figs. 8a - f illustrate the mounting of the fitting system of figures 7a - d,
Figs. 9a -f illustrate a four-part housing embodiment of the inventive fitting system as well as the mounting thereof.

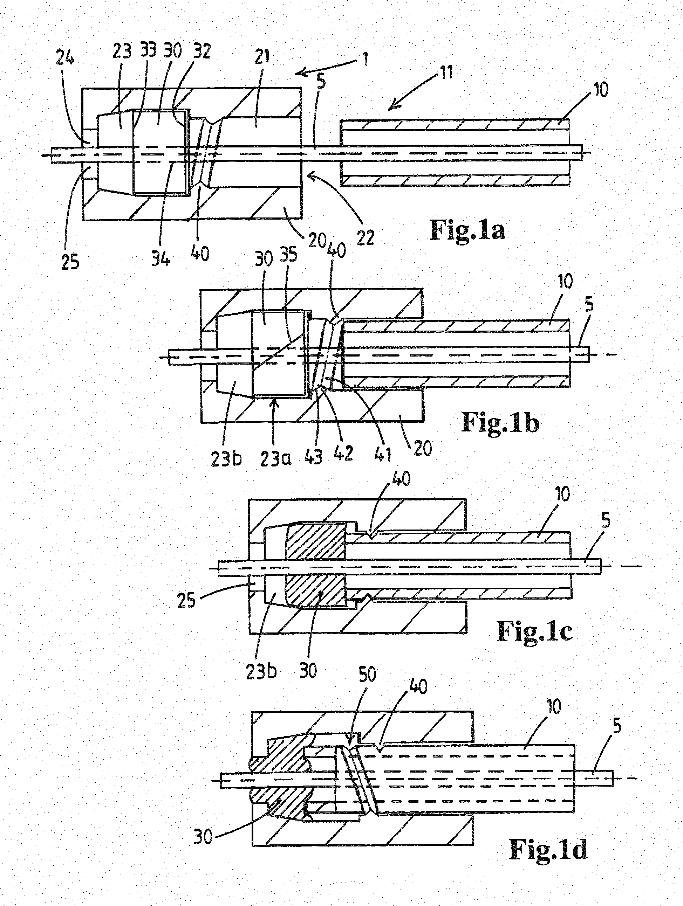

In the figures 1a, 1b, 1c, 1d an exemplary embodiment of a protective plastic pipe end fitting system 1 according to the invention is illustrated, with parts in longitudinal cross-section, during various stages of the mounting of said fitting system at an end portion 11 of a protective plastic pipe 10.

A cable 5, e.g. an optical cable, e.g. for a communication network, has been installed in the protective pipe 10. As explained, and as known in the art, instead of a cable also a smaller diameter pipe, e.g. plastic pipe, e.g. smaller diameter protective plastic pipe, could be installed in the pipe 10.

The protective pipe 10 is cylindrical in transverse cross-section, preferably with a smooth, non-corrugated outer surface.

For example, the protective pipe 10 is an extruded plastic pipe.

For example, the protective pipe 10 is a HDPE (high-density polyethylene) pipe.

For example, the protective pipe 10 has longitudinal grooves, e.g. fine grooves, in the interior surface, e.g. to facilitate installation of the cable 5 into the pipe 10.

For example, the protective pipe 10 has an outer diameter between 4 and 63 millimeters.

The fitting system 1 is adapted to provide a seal that prevents or counters transfer of fluid, e.g. water and/or gas, into and/or out of the protective plastic pipe 10. The engagement of the sealing member, as will be explained below, on the cable 5 may also provide a strain relief for the cable 5.

The illustrated fitting system 1 comprises a housing 20, here composed of a single rigid plastic housing part 20, and a compressible sealing member 30.

For example, the housing 20 is made of rigid plastic, e.g. fibre reinforced plastic, e.g. glass fibre reinforced plastic, e.g. glass fibre reinforced polyamide.

For example, the sealing member 30 is made of a synthetic rubber, e.g. a thermoplastic elastomer (TPE), or of a silicone.

The housing 20 delimits a pipe bore 21 that is adapted to receive therein the end portion 11 of the protective plastic pipe 5. The pipe bore 21 has an insertion end 22 configured for axial insertion of the end portion 11 of the protective pipe 10.

The housing 20 delimits a sealing member receiving chamber 23 that is adapted to receive therein the sealing member 30 in a non-compressed condition. This chamber 23 is arranged within the housing 20 at a location that is in line with the pipe bore 21 and is opposite the insertion end 22 of the pipe bore 21.

The housing 20 has an end wall 24 at another axial end of the housing 20, remote from the insertion end 22. The end wall 24 is provided with a laterally open passage 25 therein for the cable 5. The laterally open sealing member receiving chamber 23 is arranged between this end wall 24 and the pipe bore 21.

The compressible sealing member 30 has an annular sealing member body 31 with a pipe contacting end face 32 and with a counter end face 33 that is opposite the pipe contacting end face 32. The faces 32 may be planar and parallel to one another, as depicted here. Other designs are also possible, e.g. the end face 32 have a conical face portion that points towards the pipe bore, e.g. in order to allow the conical portion of the body to enter into the pipe end.

The sealing member body 31 has, in this example, one axial passage 34 therein, between the end faces 32, 33. This axial passage 34 is configured to receive the cable 5 passing there through.

Instead of a single cable 5 passing into the pipe 10, other embodiments could have a sealing member body with multiple axial passages 34 therein, each passage receiving one object, e.g. a cable 5 therein. The body 31 may be slitted appropriately to allow lateral introduction of each cable 5 into the respective passage 34.

In the exemplary embodiment, the chamber 23 receiving the annular sealing member 30 has a tapered section 23b that is remote from the pipe bore 21 and a non-tapered section 23a. In a substantially non-compressed condition the annular sealing member 30 is received in section 23a. As will be explained below, upon further screwing the protective pipe 10 into the fitting system the pipe 10 urges the sealing member 30 into the tapered section 23b of the chamber 23 thereby causing enhanced compression of the sealing member 30, at least onto the cable 5 passing through the sealing member 30.

The annular sealing member body 30 is split, at dividing slit 35. The pipe bore 21 is laterally open. This allows to mount the sealing member 30 and the housing 20 about the cable 5 that extends from the end portion 11 of the pipe 10 as the cable 5 has already been inserted into the pipe 5. In a following step, as will be explained below, the fitting system 1 is slid towards the protective pipe 10 so that the protective pipe end portion 11 enters the pipe bore 21 via the insertion end 22 thereof.

The housing 20 has a least one first engaged helical thread creating portion 40 that is arranged in the pipe bore 21. In this example only one portion 40 is present. In another embodiment, for example, two portions 40 are present to form a double start thread.

The first engaged helical thread creating portion 40 is first into engagement with the end portion 11 of the pipe 10 upon the entry of the pipe 10 into the pipe bore 21 via the insertion end 22 thereof. The first engaged helical thread creating portion 25 is adapted to create a helical thread 50 having a lead into the exterior of the plastic pipe 10 upon screwing the fitting system 1 onto the end portion 11 of the pipe 11.

The thread creating portion 40, here the sole portion 40 of the system, extends in helical direction over a segment of a full turn, so over less than a full turn. For example, the thread creating portion 40 extends over between a half and three quarters of a full turn.

In the depicted embodiment the helical thread creating portion 40 has a symmetric substantially triangular cross section defined by a stab flank 41 that faces the insertion opening 22, a crest ridge 42, and a load flank 43 opposite the stab flank. For example, the load flank and the stab flank have the same angle relative to a plane perpendicular to the axis of the pipe bore. The crest ridge is defined by an apex where the stab flank adjoins the load flank. This crest ridge extends over a segment of a helix.

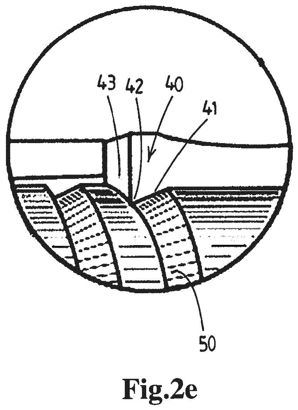

It is noted that the thread forming portion 40 may have another cross-section than depicted here, e.g. an asymmetric cross-section, e.g. as explained with reference to figure 2e.

A leading stern end 44 of the portion 40 is rather sharp and acts as a cutting formation that cuts a thread groove 50 in the exterior surface of the plastic pipe 10 when mounting is performed as explained below.

Herein the lead represents the axial distance over which the pipe 10 is advanced if one turns the pipe 10 over one complete turn. In a normal thread the lead corresponds to the pitch of the thread. In a double start thread the lead is twice the pitch.

The figures 1a - d illustrate that the first engaged helical thread creating portion 40 is arranged within an axial distance from the non-compressed sealing member 30 received in the sealing member receiving chamber 23 that is at most 2.5 leads long. In the depicted design this axial distance is between 0.5 and 1.5 leads long, more preferably about 1 lead allowing the protective pipe to contact the pipe contacting end face of the sealing member after screwing the fitting system onto the end portion over about one revolution.

As illustrated here the axial distance between the insertion end 22 of the pipe bore 21 and the first engaged helical thread creating portion 40 is at least two leads, e.g. between three and ten leads, in order to provide reliable support for the fitting system on the end portion and guidance for the end portion during mounting of the fitting system.

As illustrated here it is preferred for the pipe bore 21 to have a diameter that is slightly greater than the outer diameter of the pipe 5, at least in the region between the end 22 and the portion 40.

In figure 1a it is illustrated that the cable 5 has already been installed in the pipe 10 and extends from the outer end 11 where the fitting system 1 is to be mounted to seal the pipe end in order to avoid undue ingress of fluid, e.g. gas and/or water, or other matter, e.g. dirt, dust. The fitting system 1 may also provide strain relief for the cable 5.

In figure 1a it is illustrated that the split sealing member 30 has already been mounted on the cable 5, as the cable 5 has entered the axial passage therein via the split in the member 30.

In figure 1a it is illustrated that the housing part 20 has already been mounted over the cable, and the sealing member 30 being received in the chamber 23, here in the section 23a thereof. The mounting of the housing part 20 over the cable is possible due to the pipe bore 21 being laterally open.

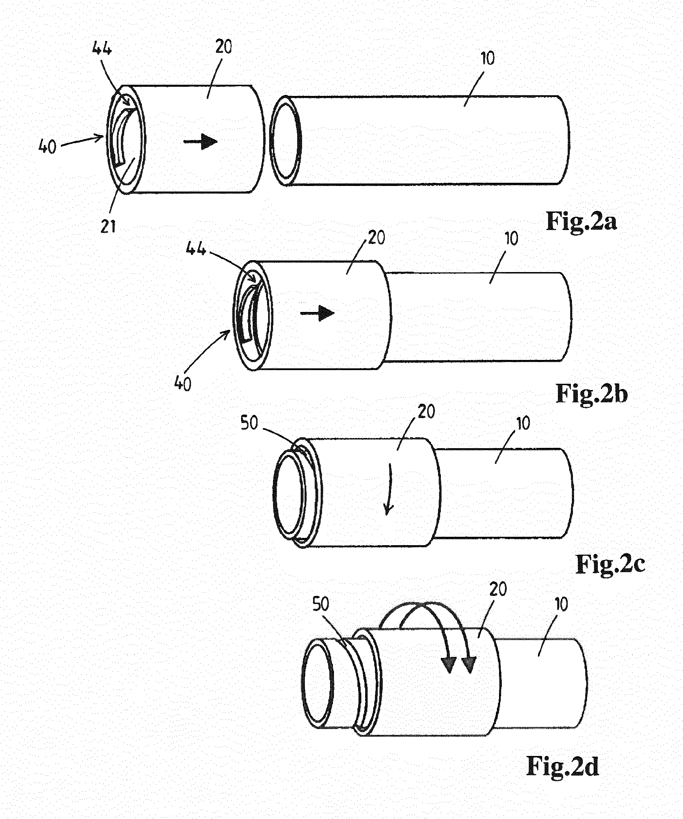

Once the stage of figure 1a has been reached, the installation engineer can push the fitting system towards and onto the outer end 11 of the pipe 10, as illustrated in figure 1b and in figure 2a. It is noted that in figure 2a - d only the portion of the housing 20 provided with the pipe bore 21 and the thread creating portion 40 is depicted to facilitate understanding the mechanism applied here. It is envisaged that in the non-compressed state the sealing member 30 does not stick, or does not stick too much, on the cable 5 in order to allow for this sliding of the system 1. In this stage the outer end 11 enters the pipe bore 21 via the insertion opening 22 thereof.

The end of the pipe 5 then comes into contact with the first engaged helical thread creating portion 40 that protrudes into the pipe bore 21, this is shown in figure 1b as well as in figure 2b. In this example it is assumed that the pipe 5 cannot be inserted deeper, e.g. by hand, as the portion 40 prevents doing so.

Now the installation engineer starts to screw the fitting system 1 onto the pipe 10 so that the first engaged helical thread creating portion 40 starts to make, e.g. cut and/or indent, a thread 50 into the outer surface of the pipe 10.

Figure 2e illustrates that the portion 40 has a cross section defined by a stab flank 41 that faces the insertion end of the pipe bore, a crest ridge 42, and a load flank 43 opposite the stab flank. The crest ridge 42 is defined by an apex where the stab flank 41 adjoins the load flank 43. Figure 2b shows that the crest ridge 42 extends over a segment of a helix. As shown in figure 2e the leading stern end 44 of the portion 40 is rather sharp and acts as a cutting formation that cuts a thread groove 50 in the exterior surface of the plastic pipe 10.

Figure 2e also illustrates the design of the portion 40 with an asymmetric cross-section defined by a low inclination stab flank, a crest ridge, and a steep load flank. Herein the load flank 43 is steeper relative to a plane perpendicular to the axis of the pipe bore than the stab flank 41. In an embodiment, the load flank 43 is at an angle between 0 and 15 degrees relative to the plane perpendicular to the axis of the pipe bore. In an embodiment, the stab flank 41 is at an angle between 45 and 75 degrees relative to the plane perpendicular to the axis of the pipe bore.

In the process of screwing the fitting system onto the pipe 10, the end of the pipe 10 advances towards, and then contacts, the pipe-contacting end face 32 of the sealing member 30. This is illustrated in figure 2c. Further screwing action causes the pipe 10 to urge the sealing member 30 towards the wall 25. Here the figure 1c shows the sealing member 30 already slightly moved from its initial location in chamber 23, here in section 23a thereof.

Continued screwing action of the fitting system 1 onto the pipe 10 causes the sealing member 30 to become compressed, here enhanced by the member 30 being urged into the tapering section 23b. The compression of the sealing member 30 causes the sealing member 30 to forcefully seal onto the cable 5 and onto the stern face of the pipe 10, so that the annulus between the cable 5 and the pipe end is effectively sealed, e.g. against ingress of gas and/or water. This is illustrated in figures 1d and 2d.

In an embodiment, as shown here, the desired rate of compression of the sealing member 30 is made visible by the sealing member 30 being partly urged into the laterally open passage 25, possibly bulging out somewhat beyond the wall 24.

As explained, it is envisaged that it requires less than three complete turns of the fitting system 1 from the first contact of the pipe end with the portion 40 to the moment of first contact with the sealing member 30, so that relatively few turns are needed for the installation of the system 1. The compression of the sealing member requires, for example, at least half a turn, for example at most four more additional turns of the system 1, depending on the structure of the sealing member 30 and/or the mounting in the housing 20.

Upon the sealing member 30 being compressed sufficiently the installation engineer stops the screwing action. The thread creating portion 40 now keeps the pipe 10 in place relative to the housing 20. No further securing activities are needed.

It will be appreciated that it is preferred to have just one first engaged helical thread creating portion 40 in the pipe bore, or alternatively two of such portions to start a double thread when desired.

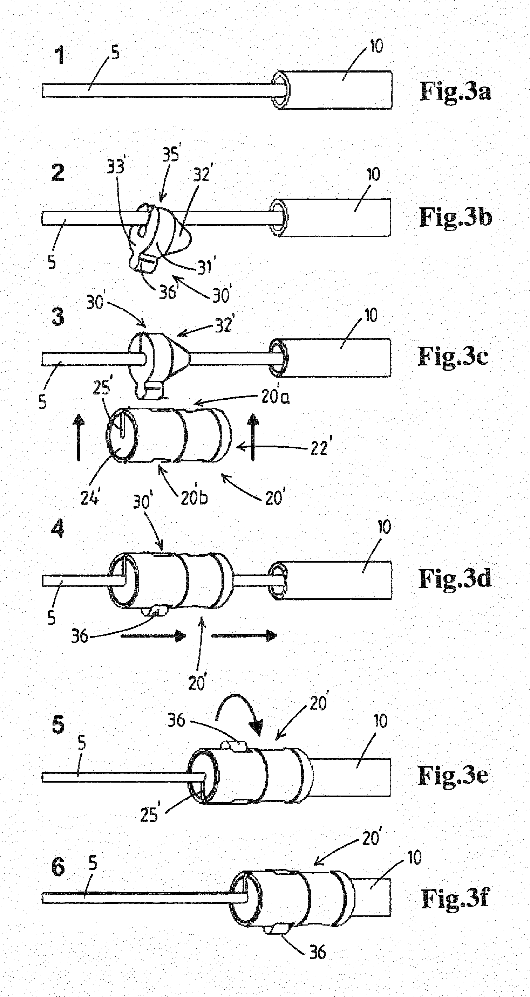

With reference to figures 3a - f now the mounting of yet another fitting system according to the invention will be briefly discussed. In these figures components similar to components addressed above are denoted with the same reference numerals.

Figure 3a illustrates that an elongated object 5, e.g. a cable, extends into protective plastic pipe 10.

Figure 3b illustrates that the compressible sealing member 30' is mounted laterally over the object 5.

The sealing member 30' has an annular sealing member body '31' with a pipe contacting end face 32' that here is of conical shape. The conical end face 32' will come to lie partly within the pipe 10 as the tip of the cone has a smaller diameter than the inner diameter of pipe 10.

The sealing member has a counter end face 33', here planar, that is opposite the pipe contacting end face 32.

The sealing member body 31' has, in this example, one axial passage therein, between the end faces 32', 33'. A dividing slit 35 in the body 31'allows to place the sealing member 30' laterally over the object 5, as shown in figure 3b.

The sealing member body 31' here has a locking tab 36 that extends from the body radially, here opposite the dividing slit.

Figure 3c illustrates that the monolithic housing 20', made of plastic material, is laterally mounted over the portion of the object 5, here cable, at the location where the sealing member 30' has already been mounted in the previous step.

The housing 20' generally has the design described with reference to figures 1, 2.

The housing 20' delimits a pipe bore that is adapted to receive therein the end portion of the protective plastic pipe 10. The pipe bore has an insertion end 22' configured for axial insertion of the end portion of the protective pipe 10. The housing 20' also has a lateral slot 20'a over the length of the pipe bore.

The housing 20 delimits a sealing member receiving chamber 23' that is adapted to receive therein the sealing member 30' in a non-compressed condition. This chamber 23' is arranged within the housing 20' at a location that is in line with the pipe bore and is opposite the insertion end 22 of the pipe bore.

For reception of the protruding locking tab 36 the housing 20' has an opening 20'b. The cooperation of the tab 36 and the opening 20'b may serve to maintain the unity and relative position during the installation process of the member 30' and the housing 20'.

The housing 20' has an end wall 24' at another axial end of the housing 20', remote from the insertion end 22'. The end wall 24' is provided with a laterally open passage 25' therein for the cable 5, which passage 25' is in the same plane as the lateral slot 20'a over the length of the pipe bore. The laterally open sealing member receiving chamber 23' is arranged between this end wall 24 and the pipe bore.

Figure 3d illustrates that the housing 20' has been mounted, so that the sealing member 30' is received in the chamber 23' and the tab 36 is in the corresponding opening 20'b. Also the housing 20' is now arranged about the object 5.

The arrows in figure 3d show that the assembly is now slid towards and onto the outer end portion of the pipe 10. Herein the pipe 10 axially enters the pipe bore. Now, as explained with reference to figures 1, 2 the person performing the installation will screw the assembly onto the pipe end until the sealing member 30' has been compressed sufficiently. This is illustrated with the arrow in figure 3e. The finally reached situation is shown in figure 3f.

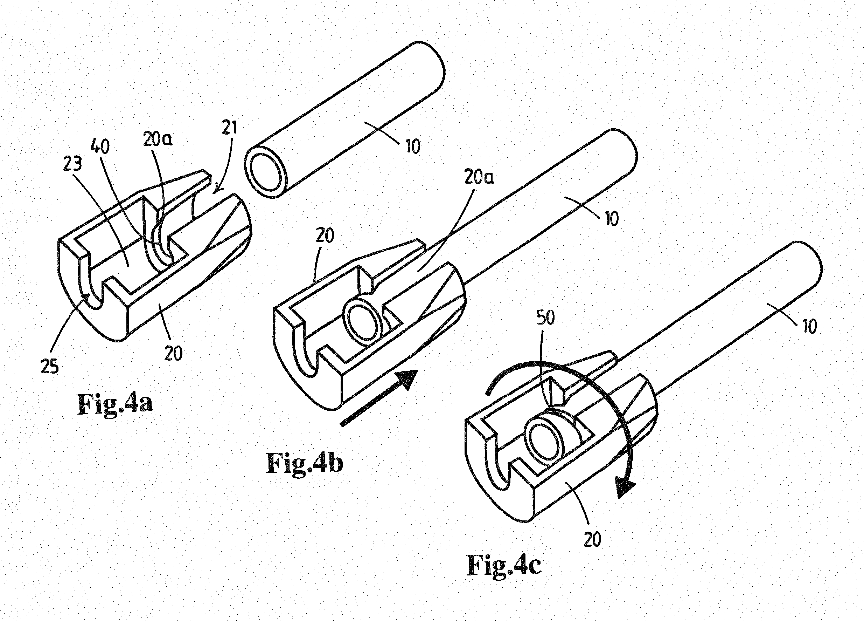

Figures 4a-c illustrate an embodiment of housing 20. Herein the chamber 23 is empty and the object, e.g. cable, have been left out for clarity. As explained a sealing member 30 will be arranged in said chamber 23. The pipe bore 21 is visible as well as slot 20a that extends over the length of the pipe bore in order to allow for lateral mounting of the housing over a non-shown object. The passage 25 is in the same plane as slot 20a. The figure 4b illustrates that the pipe end has been inserted into the pipe bore 21 of the housing 20. Herein, as explained with reference to figures 1, 2 the end portion comes into engagement with the first engaged helical thread creating portion 40 that is arranged in the pipe bore, here at the end thereof remote from the insertion side for the pipe, as is preferred. As shown in figure 4c, screwing action causes the thread creating portion 40 is adapted to create a helical thread 50 in the exterior of plastic pipe 10.

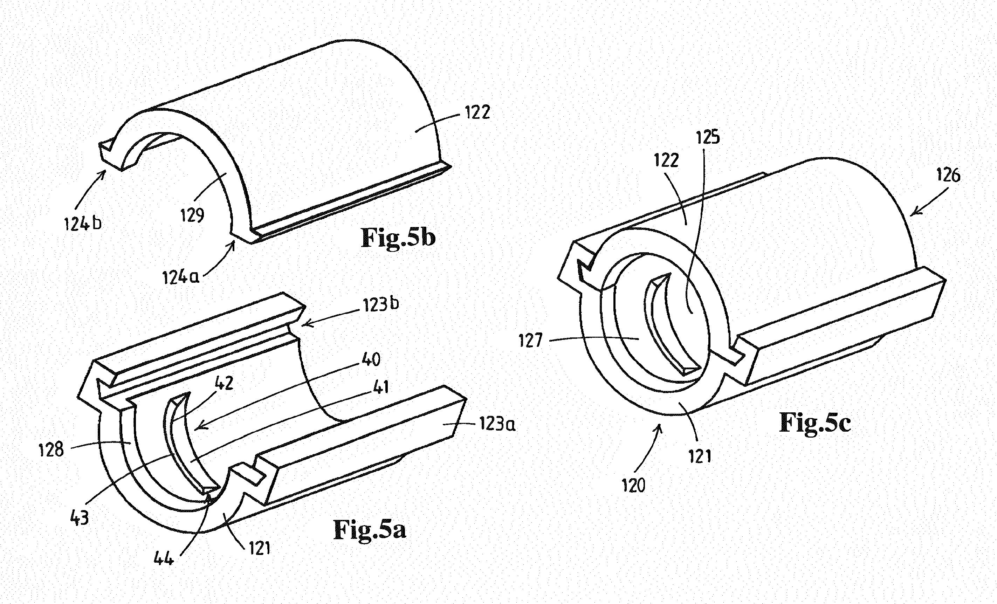

Figures 5a - c illustrate a two-part housing design of the inventive fitting system.

The fitting system has a housing 120 with a first semi-circular cross-section housing part 121 and a second semi-circular cross-section housing part 122, e.g. both made of plastic material, e.g. hard plastic.

Here at least one, here part 121, is provided a respective first engaged helical thread creating portion 40.

The first and second semi-circular cross-section housing parts 121, 122 have cooperating male and female connector portions 123, 124, along longitudinal edges of the housing parts 121, 122 so that they can be joined to another to form a closed annular housing structure. Here, as preferred, the male and female connector portions 123a,b, 124a,b are embodied as a longitudinally extending rib and groove structure. Here pressing one housing part 121 onto the other housing part 122 causes the ribs to engage in the grooves and thereby the joining of the housing parts 121, 122.

When joined together (see figure 5c) the housing parts 121, 122 together define a pipe bore 125 with an insertion opening 126. The pipe bore 125 extends between the opening 126 and the location of the thread creating portion 40.

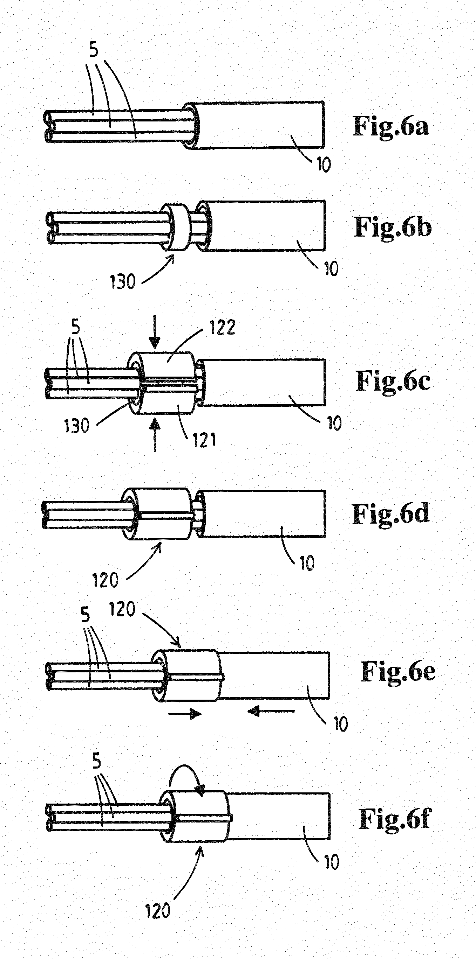

The fitting system further comprises sealing member 130, of which an example is shown in figure 6b. This sealing member 130 has one or more, here three, axial passages to receive therein one elongated object, here cable 5, per axial passage. The body of the member 130 is provided with a slit to allow for lateral introduction of each cable into the respective axial passage of the sealing member body.

The housing parts 121, 122 together define a chamber 127 wherein the sealing member 130 is received. In the depicted embodiment, each housing part 121, 122 has an inward flanged end wall portion 128, 129 at the end remote from the insertion opening 126. Together the end wall portions 128, 129 provide support for the counter-face of the sealing member 130.

Figures 6a - f illustrate the mounting of the fitting system of figures 5a-c. In these figures components similar to components addressed above are denoted with the same reference numerals.

Figure 6a illustrates that one or more elongated objects 5, here three cables 5, extend into protective plastic pipe 10.

Figure 6b illustrates that the compressible sealing member 130 is mounted over the objects 5.

The sealing member 130 has an annular sealing member body with a pipe contacting end face that here is of planar design. The sealing member 130 has a counter end face, here planar, that is opposite the pipe contacting end face.

The sealing member body 130 has, in this example, three axial passages therein, between the end faces. A slit here is provided for each passage in the body 130, which allows to place the sealing member laterally over each of the objects, as shown in figure 6b.

Figure 6c illustrates that the two-part housing 120 is laterally mounted over the portion of the objects 5, here cables, where the sealing member 30 has already been mounted in the previous step. It is shown in figure 6d that, as a result of pressing the parts 121, 122 onto each other, the ribs engage in the grooves and thereby the parts 121, 122 are mechanically joined. Now the sealing member 130 is within the chamber formed by the housing parts 121, 122.

The arrows in figure 6e show that the assembly of the housing parts 121, 122 and the sealing member 130 is now slid towards and onto the outer end portion of the pipe 10. Herein the pipe 10 axially enters the pipe bore defined by the housing parts. Now, as explained with reference to figures 1, 2 the person performing the installation will screw the assembly onto the pipe end until the sealing member 130 has been compressed sufficiently. This is illustrated with the arrow in figure 6f.

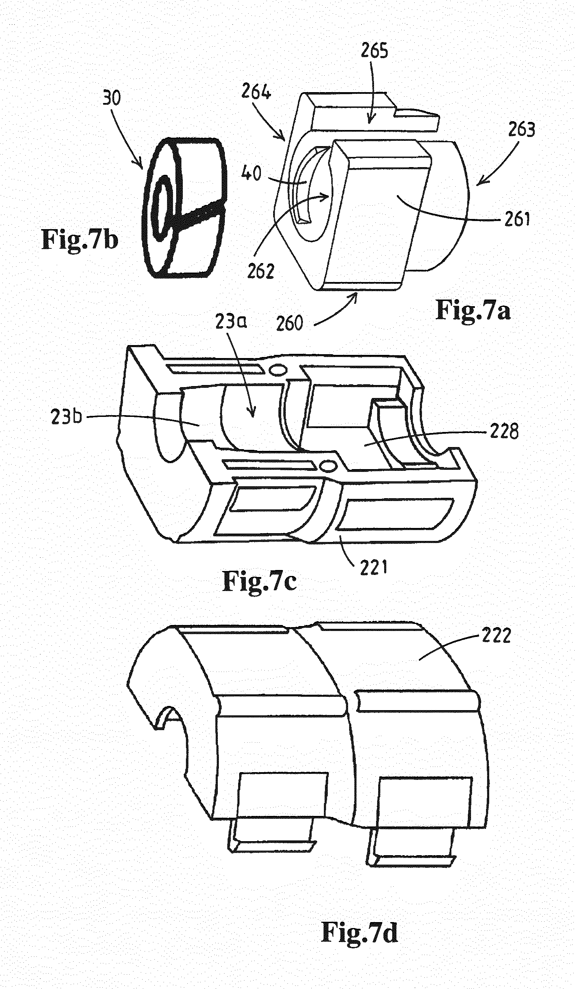

Figures 7a-d illustrate a three-part housing design of the inventive fitting system.

The housing 220 has a first outer housing part 221 and a second outer housing part 222 as well as an exchangeable thread creating housing part 260.

The first and second outer housing parts 221, 222 when joined together delimit a receiving chamber 228 that is configured for exchangeable mounting therein the thread creating housing part 260.

The thread creating housing part 260 has a body 261, e.g. made of hard plastic material, having an axial length. The body 261 forms a pipe bore 262 to receive therein the outer end portion of a protective plastic pipe. Reference numeral 263 indicates a protective plastic pipe insertion end of the pipe bore 262. The pipe bore has an opposed second axial end 264. Also, the body 261 has a lateral opening, as a longitudinal slot 265, adjoining the pipe bore 262.

The thread creating housing part 260 is provided with at least one first engaged helical thread creating portion 40 arranged in the pipe bore 262. As shown the portion 40 is arranged adjacent the second axial end 264 of the bore 262.

As shown the receiving chamber 228 for exchangeable mounting therein of the thread creating housing part 261 on the one hand and the body 261 of the thread creating housing part 261 on the other hand have cooperating form-fit formations embodied so that the thread creating housing part 261 can only be mounted in one position therein, wherein the insertion end thereof faces the protective plastic pipe end that is to be inserted into the pipe bore.

The three housing part embodiment also comprises the sealing member 30.

As explained with reference to figure 1 the housing parts 221, 222 may, as shown here, form a chamber receiving the annular sealing member 30 that has a tapered section 23b remote from the pipe bore and a non-tapered section 23a in which the annular sealing member 30 in non-compressed condition is received, so that upon further screwing the protective pipe urges the sealing member into the tapered section 23b of the chamber, thereby causing enhanced compression of the sealing member, at least onto the one or more elongated objects 5 passing through the sealing member 30.

The exchangeability of the exchangeable thread creating housing part 260 allows for an embodiment wherein one set of the housing parts 221, 222 is supplied with not only one housing part 260, but with a first exchangeable thread creating housing part and a second exchangeable thread creating housing part. Herein both exchangeable housing parts fit into the ensemble of the housing parts 221, 222, e.g. the exchangeable housing parts being identical as to the dimensions of the portions that mate with the housing parts 221, 222. Yet the first exchangeable thread creating housing part is embodied to receive end portion of a first outer diameter protective tube and the second exchangeable thread creating housing part is embodied to receive end portion of a second outer diameter protective tube, the first outer diameter being different than the second outer diameter. This allows to use the fitting system with a range of different protective pipe diameters.

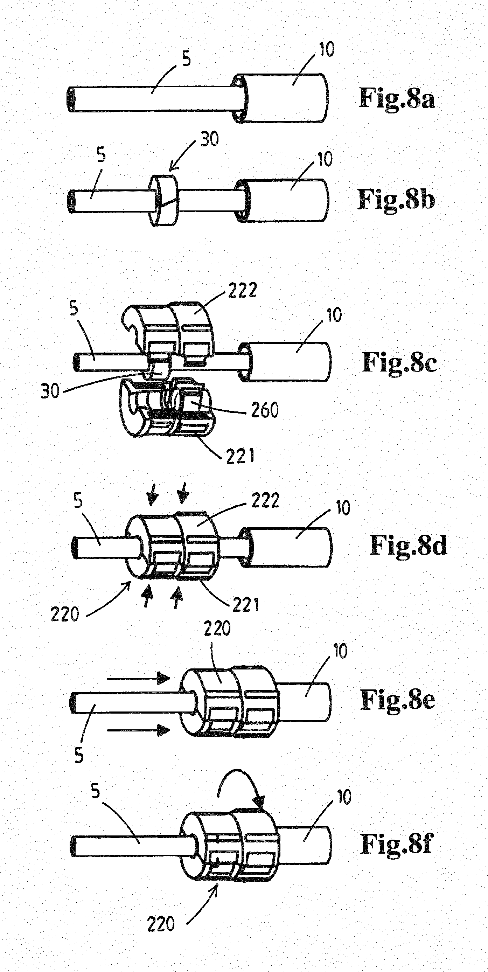

Figures 8a - f illustrate the mounting of the fitting system of figures 7a-d. In these figures, components similar to components addressed above are denoted with the same reference numerals.

In these figures components similar to components addressed above are denoted with the same reference numerals.

Figure 8a illustrates that elongated object 5, e.g. a cable, extends into protective plastic pipe 10.

Figure 8b illustrates that compressible sealing member 30 is mounted laterally over the object 5. The sealing member body has, in this example, one axial passage therein, between the end faces. A dividing slit in the body allows to place the sealing member 30 laterally over the object 5, as shown in figure 8b.

Figure 8c illustrates that the thread creating housing part 261 has been arranged in the portion of the chamber 225 defined by the first housing part 221. As explained this can only be done so that the insertion end of the pipe bore faces away from the chamber 23 where the sealing member 30 is to be received in the housing.

The ensemble of first housing part 221 and housing part 261 is then fitted over the object 5 at the location where the sealing member 30 has been mounted, so that the sealing member 30 is received in the respective chamber 23.

The figure 8c also illustrates that the second housing part 222 is mated or joined to the first housing part 221 so as to form an annular outer housing. For example, as shown here, an arrangement of snap fingers is provided in order to snap the housing parts 221, 222 onto each other. As will be appreciated other fastening structures could be provided as well. The joined state of the outer housing parts 221, 222 is shown in figure 8d.

Now, e.g. as explained above, the fitting system is slid towards the pipe 10, so that the outer end portion thereof enters the pipe bore 261 in the housing part 261. As explained with reference to figures 1, 2 the person performing the installation will screw the system onto the pipe end until the sealing member 30 has been compressed sufficiently. This is illustrated with the arrow in figure 8f.

Figures 9a-f illustrate an embodiment of another inventive fitting system.

Figure 9a shows a first protective plastic pipe 10 and a second protective plastic pipe 10'. These pipes 10, 10' here have a different diameter, e.g. the second pipe 10' having a smaller outer diameter than the first pipe 10.

It is illustrated in figure 9a that the pipes 10, 10' are aligned yet spaced apart. An elongated object 5, e.g. a cable, e.g. an optical cable, extends in both of the pipes 10, 10' so that a section of the object 5 is exposed between the pipe ends in this initial situation.

Figure 9b illustrates the fitting system. In this example the three-part housing of figures 7a-d, 8a-f, is shown. This housing 220 has a first outer housing part 221 and a second outer housing part 222 as well as an exchangeable thread creating housing part 260. Also shown in compressible sealing member 30.

Generally, the fitting system of figures 9a-f is configured to interconnect the first protective plastic pipe 10 and the second protective plastic pipe 10' whilst the elongated object 5 extends in both of the first and second protective plastic pipes 10, 10'and passes through a respective axial passage in the sealing member 30.

The fitting system also comprises a second pipe connector part 300. This part 300 has a body 301 delimiting a second pipe bore 302 that is laterally open as longitudinal slot 303 joins the pipe bore 302. This allows to place the second pipe connector part 300 over the elongated object 5 in the situation of figure 9a.

The second pipe bore 302 is adapted to axially introduce therein an end portion of a second protective plastic pipe 10' via an insertion end 304 of the second pipe bore 302. Not visible in the figures 9a-f is that the second pipe connector part 300 is provided with a which helical thread creating portion that is adapted to create a helical thread having a lead into the exterior of the second protective plastic pipe 10' upon screwing the second pipe connector part onto the introduced end portion of the second protective plastic pipe. The structure and operation may be similar as described with reference to the portion 40.

The second pipe connector part 300 is provided with a flanged protrusion 310 that extends from the body 301 thereof opposite the insertion end 304 of the second pipe bore 302. In this example the protrusion 310 is C-shaped in transverse section and extends partially about the pipe bore 302 so that the second pipe 10' can protrude with an end face thereof beyond the protrusion 310. For example, this relative position of the second pipe 10' can be achieved by screwing the part 300 onto the pipe 10'.This is illustrated in figure 9c.

The same figure 9c illustrates that the exchangeable thread creating housing part 260 has been placed in the respective chamber portion in the first outer housing part 221. The sealing member 30 has been mounted over the elongated object 5, between the part 300 and the end face of the first pipe 10.

The first outer housing part 221 and the second outer housing part 222 each have an end wall portion 224 so as to form an annular end wall 224 when the housing parts 221 and 222 are joined into an annular outer housing. Each end wall portion 224 effectively forms a laterally open passage 225.

Figure 9d illustrates that the ensemble of first outer housing part 221 and thread creating housing part 260 has been placed laterally onto the elongated object 5 in such a manner that also the flanged protrusion 310 enters into the laterally open passage 225 formed by the end wall portion 224 of the first outer housing part 221. As a result the housing part 221 and the part 300 are now interconnected. So the end wall 224 with passage 225 and the protrusion 310 here form cooperating connector members, that are configured to connect the housing to the second pipe connector part 300 which has already been screwed onto the second protective plastic pipe 10'.

Once the interconnection between first outer housing part 221 and part 300 has been made, the second outer housing part 222 is joined onto the part 221. In this example cooperation snap fingers and associated openings or recesses are provided to snap fit these outer housing parts onto one another.

Now the fitting system, including the second pipe 10' that is retained by the connector part 300 is slid towards the end portion of the first pipe 10. As will be understood, this is done so that the pipe 10 enters into the pipe bore of part 260, until it is needed to start a screwing motion of the fitting system to further advance the end of pipe 10 into the fitting system.

The figure 9e, wherein second outer housing part 222 has been left out for clarity, illustrates that the sealing member 30 and respective sealing member chamber 23 in the housing are embodied such that, in connected state of the housing 220 and the second pipe connector part 300, an end face of the second protective pipe 10' is directed to a second pipe contacting end face of the sealing member 30, so that upon screwing the fitting system in said connected state onto the end portion of the first protective plastic pipe 10 the end face of said first protective plastic pipe 10 comes into contact with the pipe contacting end face of the sealing member. Upon continuing said screwing the compressible sealing member 30 becomes compressed between the end faces of the first and second protective plastic pipes 10, 10' so that a seal is obtained. The final situation is shown in figure 9f.

In this embodiment of figure 9 the sealing member 30 may seal onto the elongated object 5 once the screwing has been completed. However, in embodiments, the object 5 may also be not clamped by the sealing member in this final situation.

## Claims

1. Protective plastic pipe end fitting system (1) adapted to be mounted at an end portion of a protective plastic pipe (10) into which at least one elongated object (5) passes, the fitting system being adapted to provide a seal that prevents transfer of fluid into and/or out of the protective plastic pipe (10),
wherein the fitting system (1) comprises:
- a housing (20) composed of one or more rigid plastic housing parts,
- a compressible sealing member (30),
wherein the housing delimits a pipe bore (21) that is adapted to receive therein an end portion (11) of a protective plastic pipe, the pipe bore having an insertion end (22) for axial insertion of the end portion of the protective pipe,
wherein the housing delimits a sealing member receiving chamber (23) that is adapted to receive therein the sealing member (30) in a non-compressed condition, said chamber (23) being arranged in line with the pipe bore (21) and opposite the insertion end (22) of the pipe bore,
wherein the compressible sealing member (30) has an annular sealing member body (31), said body (31) having a pipe contacting end face (32) and a counter end face (33) opposite said pipe contacting end face, said sealing member body having at least one axial passage (34) therein, said at least one axial passage (34) being configured to receive an elongated object (5) passing there through,
wherein the annular sealing member body (30) is split (35) and the pipe bore (21) is laterally open allowing to mount the sealing member (30) and the housing (20) about an elongated object (5) that extends from the end portion of the protective pipe (10) into which the elongated object (5) has already been inserted and to then slide the fitting system (1) towards the protective pipe so that the protective pipe enters the pipe bore via the insertion end thereof,
wherein the housing has a least one first engaged helical thread creating portion (40) that is arranged in the pipe bore, which first engaged helical thread creating portion is first into engagement with the end portion (11) of the protective plastic pipe (10) upon said entry of the protective plastic pipe into the pipe bore (21) via the insertion end (22) thereof and which first engaged helical thread creating portion (40) is adapted to create a helical thread (50) having a lead into the exterior of the protective plastic pipe (10) upon screwing the fitting system (1) onto the end portion (11) of the protective plastic pipe, so that the end face of the protective plastic pipe (10) comes into contact with the pipe contacting end face (32) of the sealing member, wherein upon continuing said screwing the compressible sealing member (30) becomes compressed and seals onto the end of the protective plastic pipe (10),
**characterized in that**
the first engaged helical thread creating portion (40) has an asymmetric cross-section defined by a low inclination stab flank (41), a crest ridge (42), and a steep load flank (43).

2. Protective plastic pipe end fitting system according to claim 1, wherein the crest ridge (42) is defined by an apex where the stab flank (41) adjoins the load flank (43), and wherein the crest ridge (42) extends over a segment of a helix.

3. Protective plastic pipe end fitting system according to claim 1 or 2, wherein the load flank (43) is steeper relative to a plane perpendicular to the axis of the pipe bore than the stab flank (41).

4. Protective plastic pipe end fitting system according to any one or more of claims 1 - 3, wherein the load flank (43) is at an angle between 0 and 15 degrees relative to the plane perpendicular to the axis of the pipe bore.

5. Protective plastic pipe end fitting system according to any one or more of claims 1 - 4, wherein the stab flank (41) is at an angle between 45 and 75 degrees relative to the plane perpendicular to the axis of the pipe bore.

6. Protective plastic pipe end fitting system according to any one or more of claims 1 - 5, wherein the housing (20) is a one-part housing having a single rigid plastic elongated housing part, wherein the elongated housing part forms the pipe bore (21) with the insertion end (22) thereof at one axial end of the housing part, and wherein the elongated housing part forms the lateral opening adjoining the pipe bore, and wherein the elongated housing part has an end wall (24) at another axial end of the housing part, wherein said end wall is provided with laterally open passage (25) therein for the elongated object (5), wherein a laterally open sealing member receiving chamber (23) is arranged between said end wall and the pipe bore.

7. Protective plastic pipe end fitting system according to any one or more of claims 1 - 5, wherein the housing is a two-part housing having a first semi-circular cross-section housing part and a second semi-circular cross-section housing part, wherein at least one, preferably each, of the first and second housing parts is provided a respective one first engaged helical thread creating portion.

8. Protective plastic pipe end fitting system according to claim 7, wherein the first and second semi-circular cross-section housing parts are connectable along longitudinal edges of the housing parts by means of connectors members of the fitting system, for example the first and second semi-circular cross-section housing parts each having connector ribs protruding outwards along the longitudinal edges thereof and the connector members being adapted to slide over two adjoining connector ribs.

9. Protective plastic pipe end fitting system according to any one or more of claims 1 - 5, wherein housing is a three-part housing having a first outer housing part (221) and a second outer housing part (222) as well as an exchangeable thread creating housing part (260),
wherein the first and second outer housing parts (221,222) delimit a receiving chamber (228) for exchangeable mounting therein of the thread creating housing part (260),
wherein the thread creating housing part has a body (261) having an axial length, a protective plastic pipe insertion end (263), and an opposed second axial end (264), wherein said body forms the pipe bore (262) and has a lateral opening (265) adjoining the pipe bore,
wherein the thread creating housing part (260) is provided with said at least one first engaged helical thread creating portion (40) arranged in the pipe bore (262).

10. Protective plastic pipe end fitting system according to claim 9, wherein the fitting system comprises a first exchangeable thread creating housing part (260) and comprises a second exchangeable thread creating housing part, wherein the first exchangeable thread creating housing part is embodied to receive end portion of a first outer diameter protective tube and wherein the second exchangeable thread creating housing part is embodied to receive end portion of a second outer diameter protective tube, the first outer diameter being different than the second outer diameter, wherein each of the first and second exchangeable thread creating housing parts are configured to be received in the receiving chamber delimited by the first and the second outer housing parts.

11. Protective plastic pipe end fitting system according to any one or more of claims 1 - 10, wherein the chamber (23) receiving the annular sealing member has a tapered section (23b) remote from the pipe bore (21) and a non-tapered section (23a) in which the annular sealing member (30) in non-compressed condition is received, so that upon further screwing the protective pipe (10) urges the sealing member into the tapered section (23b) of the chamber (23), thereby causing enhanced compression of the sealing member, at least onto the one or more elongated objects (5) passing through the sealing member.

12. Method for mounting a protective plastic pipe end fitting system according to any one or more of claims 1 - 11 at an end portion of a protective plastic pipe into which at least one elongated object passes, wherein the person performing the installation pushes the end of the plastic pipe initially beyond the first engaged helical thread creating portion (40).

13. Method according to claim 12, wherein the person performing the installation pushes the end of the plastic pipe initially beyond the first engaged helical thread creating portion directly into engagement with the sealing member, so that no screwing motion at all is required to establish initial contact between the pipe end face and the sealing member, and so that then, for compression of the sealing member to a desired degree, the person performs a screw motion.

## Patentansprüche

1. Einbausystem für ein schützendes Kunststoffrohrende (1), das dazu eingerichtet ist, an einem Endabschnitt eines schützenden Kunststoffrohrs (10) montiert zu sein, in das mindestens ein längliches Objekt (5) verläuft, wobei das Einbausystem dazu eingerichtet ist, eine Dichtung vorzusehen, welche die Verlagerung von Fluid in das schützende Kunststoffrohr (10) hinein und/oder daraus heraus verhindert,
wobei das Einbausystem (1) Folgendes umfasst:
- ein Gehäuse (20), das aus einem oder mehreren steifen Kunststoffgehäuseteilen zusammengesetzt ist,
- ein komprimierbares Dichtungselement (30),
wobei das Gehäuse eine Rohrbohrung (21) begrenzt, die dazu eingerichtet ist, darin einen Endabschnitt (11) eines schützenden Kunststoffrohrs aufzunehmen, wobei die Rohrbohrung ein Einsetzende (22) zum axialen Einsetzen des Endabschnitts des schützenden Rohrs aufweist,
wobei das Gehäuse eine Dichtungselementaufnahmekammer (23) begrenzt, die dazu eingerichtet ist, darin das Dichtungselement (30) in einem unkomprimierten Zustand aufzunehmen, wobei die Kammer (23) mit der Rohrbohrung (21) ausgerichtet und dem Einsetzende (22) der Rohrbohrung entgegengesetzt angeordnet ist,
wobei das komprimierbare Dichtungselement (30) einen ringförmigen Dichtungselementkörper (31) aufweist, wobei der Körper (31) eine Rohrkontaktendfläche (32) und eine der Rohrkontaktendfläche entgegengesetzte Gegenendfläche (33) aufweist, wobei der Dichtungselementkörper mindestens einen axialen Durchgang (34) darin aufweist, wobei der mindestens eine axiale Durchgang (34) dazu ausgelegt ist, ein dort hindurch verlaufendes längliches Objekt (5) aufzunehmen,
wobei der ringförmige Dichtungselementkörper (30) gespaltet (35) und die Rohrbohrung (21) seitlich offen ist, wodurch die Montage des Dichtungselements (30) und des Gehäuses (20) um ein längliches Objekt (5) zugelassen wird, das sich vom Endabschnitt des schützenden Rohrs (10), in welches das längliche Objekt (5) bereits eingesetzt wurde, erstreckt, und anschließend das Einbausystem (1) zum schützenden Rohr geschoben wird, sodass das schützende Rohr über sein Einsetzende in die Rohrbohrung eintritt,
wobei das Gehäuse mindestens einen erst eingegriffenen Schraubengewindeerzeugungsabschnitt (40) aufweist, der in der Rohrbohrung angeordnet ist, wobei der erst eingegriffenen Schraubengewindeerzeugungsabschnitt beim Eintritt des schützenden Kunststoffrohrs in die Rohrbohrung (21) mittels dessen Einsetzende (22) zuerst mit dem Endabschnitt (11) des schützenden Kunststoffrohrs in Eingriff ist und wobei der erst eingegriffenen Schraubengewindeerzeugungsabschnitt (40) dazu eingerichtet ist, ein Schraubengewinde (50) zu erzeugen, das beim Schrauben des Einbausystems (1) auf den Endabschnitt (11) des schützenden Kunststoffrohrs (10) eine Steigung in das Äußere des schützenden Kunststoffrohrs (10) aufweist, sodass die Endfläche des schützenden Kunststoffrohrs (10) die Rohrkontaktendfläche (32) des Dichtungselements berührt, wobei beim weiteren Schrauben das komprimierbare Dichtungselement (30) komprimiert wird und am Ende des schützenden Kunststoffrohrs (10) abdichtet,
**dadurch gekennzeichnet, dass**
der erst eingegriffenen Schraubengewindeerzeugungsabschnitt (40) einen asymmetrischen Querschnitt aufweist, der durch eine Eingriffsflanke mit niedrigem Gefälle (41), einen Spitzenzahn (42) und eine steile Lastflanke (43) definiert ist.

2. Einbausystem für ein schützendes Kunststoffrohrende nach Anspruch 1, wobei der Spitzenzahn (42) durch einen Scheitel wo die Eingriffsflanke (41) an die Lastflanke (43) angrenzt definiert ist, und wobei sich der Spitzenzahn (42) über ein Segment einer Helix erstreckt.

3. Einbausystem für ein schützendes Kunststoffrohrende nach Anspruch 1 oder 2, wobei die Lastflanke (43) in Bezug zu einer Ebene, die senkrecht zur Achse der Rohrbohrung verläuft, steiler ist als die Eingriffsflanke (41) .

4. Einbausystem für ein schützendes Kunststoffrohrende nach einem oder mehreren der Ansprüche 1-3, wobei die Lastflanke (43) zur Ebene, die senkrecht zur Achse der Rohrbohrung verläuft, zwischen 0 und 15 Grad angewinkelt ist.

5. Einbausystem für ein schützendes Kunststoffrohrende nach einem oder mehreren der Ansprüche 1-4, wobei die Eingriffsflanke (41) zur Ebene, die senkrecht zur Achse der Rohrbohrung verläuft, zwischen 45 und 75 Grad angewinkelt ist.

6. Einbausystem für ein schützendes Kunststoffrohrende nach einem oder mehreren der Ansprüche 1-5, wobei das Gehäuse (20) ein einteiliges Gehäuse mit einem einzelnen steifen länglichen Kunststoffgehäuseteil ist, wobei der längliche Gehäuseteil die Rohrbohrung (21) mit dessen Einsetzende (22) an einem axialen Ende des Gehäuseteils ausbildet und wobei der längliche Gehäuseteil die an die Rohrbohrung angrenzende seitliche Öffnung ausbildet und wobei der längliche Gehäuseteil eine Stirnwand (24) an einem weiteren axialen Ende des Gehäuseteils aufweist, wobei die Stirnwand mit einem seitlich offenen Durchgang (25) darin für das längliche Objekt (5) versehen ist, wobei eine seitlich offene Dichtungselementaufnahmekammer (23) zwischen der Stirnwand und der Rohrbohrung angeordnet ist.

7. Einbausystem für ein schützendes Kunststoffrohrende nach einem oder mehreren der Ansprüche 1-5, wobei das Gehäuse ein zweiteiliges Gehäuse ist, dass einen ersten Gehäuseteil mit einem halbkreisförmigen Querschnitt und einen zweiten Gehäuseteil mit einem halbkreisförmigen Querschnitt aufweist, wobei mindestens einer, vorzugsweise beide, des ersten und zweiten Gehäuseteils mit einem jeweiligen erst eingegriffenen Schraubengewindeerzeugungsabschnitt versehen ist.

8. Einbausystem für ein schützendes Kunststoffrohrende nach Anspruch 7, wobei der erste und zweite Gehäuseteil mit einem halbkreisförmigen Querschnitt entlang Längskanten der Gehäuseteile mittels Verbindungselementen des Einbausystems verbindbar sind, zum Beispiel wobei der erste und zweite Gehäuseteil mit einem halbkreisförmigen Querschnitt jeweils Verbindungsrippen aufweisen, die entlang deren Längskanten nach außen vorstehen, und wobei die Verbindungselemente dazu eingerichtet sind, über zwei angrenzende Verbindungsrippen zu gleiten.

9. Einbausystem für ein schützendes Kunststoffrohrende nach einem oder mehreren der Ansprüche 1-5, wobei das Gehäuse ein dreiteiliges Gehäuse mit einem ersten äußeren Gehäuseteil (221) und einem zweiten äußeren Gehäuseteil (222) sowie einem austauschbaren gewindeerzeugenden Gehäuseteil (260) ist,
wobei der erste und zweite äußere Gehäuseteil (221, 222) eine Aufnahmekammer (228) zur austauschbaren Montage des gewindeerzeugenden Gehäuseteils (260) darin begrenzen, wobei der gewindeerzeugende Gehäuseteil einen Körper (261) aufweist, der eine axiale Länge, ein schützendes Kunststoffrohreinsetzende (263) und ein entgegengesetztes zweites axiales Ende (264) aufweist,
wobei der Körper die Rohrbohrung (262) ausbildet und eine an die Rohrbohrung angrenzende seitliche Öffnung (265) aufweist,
wobei der gewindeerzeugende Gehäuseteil (260) mit dem mindestens einen in der Rohrbohrung (262) angeordneten erst eingegriffenen Schraubengewindeerzeugungsabschnitt (40) versehen ist.

10. Einbausystem für ein schützendes Kunststoffrohrende nach Anspruch 9, wobei das Einbausystem einen ersten austauschbaren gewindeerzeugenden Gehäuseteil (260) umfasst und einen zweiten austauschbaren gewindeerzeugenden Gehäuseteil umfasst, wobei der erste austauschbare gewindeerzeugende Gehäuseteil ausgeführt ist, um einen Endabschnitt eines schützenden Rohrs mit einem ersten Durchmesser aufzunehmen, und wobei der zweite austauschbare gewindeerzeugende Gehäuseteil ausgeführt ist, um den Endabschnitt eines schützenden Rohrs mit einem zweiten Durchmesser aufzunehmen, wobei sich der erste Außendurchmesser vom zweiten Außendurchmesser unterscheidet, wobei der erste und zweite austauschbare gewindeerzeugende Gehäuseteil dazu ausgelegt sind, in der durch den ersten und zweiten äußeren Gehäuseteil begrenzten Aufnahmekammer aufgenommen zu werden.

11. Einbausystem für ein schützendes Kunststoffrohrende nach einem oder mehreren der Ansprüche 1-10, wobei die das ringförmige Dichtungselement aufnehmende Kammer (23) einen von der Rohrbohrung (21) entfernten, verjüngten Abschnitt (23b) und einen nicht verjüngten Abschnitt (23a) aufweist, in dem das ringförmige Dichtungselement (30) im unkomprimierten Zustand aufgenommen ist, sodass beim weiteren Schrauben das schützende Rohr (10) das Dichtungselement in den verjüngten Abschnitt (23b) der Kammer (23) drückt, wodurch eine verstärkte Kompression des Dichtungselements, zumindest auf das eine oder die mehreren durch das Dichtungselement verlaufenden länglichen Objekte (5) bewirkt wird.

12. Verfahren zur Montage eines Einbausystems für ein schützendes Kunststoffrohrende nach einem oder mehreren der Ansprüche 1-11 an einem Endabschnitt eines schützenden Kunststoffrohrs, in das mindestens ein längliches Objekt verläuft, wobei die einbauende Person das Kunststoffrohrende zunächst über den erst eingegriffenen Schraubengewindeerzeugungsabschnitt (40) hinaus schiebt.

13. Verfahren nach Anspruch 12, wobei die einbauende Person das Kunststoffrohrende zunächst über den erst eingegriffenen Schraubengewindeerzeugungsabschnitt hinaus in direkten Eingriff mit dem Dichtungselement schiebt, sodass keinerlei Schraubbewegung erforderlich ist, um den Erstkontakt zwischen der Rohrendfläche und dem Dichtungselement herzustellen, und sodass die Person anschließend eine Schraubbewegung ausführt, um das Dichtungselement in einem gewünschten Grad zu komprimieren.

## Revendications

1. Système de fixation d'extrémité de tuyau en plastique protecteur (1) conçu pour être monté au niveau d'une partie d'extrémité d'un tuyau en plastique protecteur (10) dans lequel passe au moins un objet allongé (5), le système de fixation étant conçu pour fournir un joint qui empêche le transfert de fluide dans le tuyau en plastique protecteur (10) et/ou hors de celui-ci,
le système de fixation (1) comprenant :
- un boîtier (20) composé d'une ou de plusieurs parties de boîtier en plastique rigide,
- un élément d'étanchéité compressible (30),
le boîtier délimitant un alésage de tuyau (21) qui est conçu pour recevoir en son sein une partie d'extrémité (11) d'un tuyau en plastique protecteur, l'alésage de tuyau ayant une extrémité d'insertion (22) pour l'insertion axiale de la partie d'extrémité du tuyau protecteur,
le boîtier délimitant une chambre de réception d'élément d'étanchéité (23) qui est conçue pour recevoir en son sein l'élément d'étanchéité (30) dans un état non comprimé, ladite chambre (23) étant disposée dans l'alignement de l'alésage de tuyau (21) et à l'opposé de l'extrémité d'insertion (22) de l'alésage de tuyau,
l'élément d'étanchéité compressible (30) ayant un corps d'élément d'étanchéité annulaire (31), ledit corps (31) ayant une face d'extrémité en contact avec le tuyau (32) et une face d'extrémité opposée (33) opposée à ladite face d'extrémité en contact avec le tuyau, ledit corps d'élément d'étanchéité ayant au moins un passage axial (34) en son sein, ledit au moins un passage axial (34) étant conçu pour recevoir un objet allongé (5) passant au travers,
le corps d'élément d'étanchéité annulaire (30) étant fendu (35) et l'alésage de tuyau (21) étant ouvert latéralement, ce qui permet de monter l'élément d'étanchéité (30) et le boîtier (20) autour d'un objet allongé (5) qui s'étend de la partie d'extrémité du tuyau protecteur (10) dans lequel l'objet allongé (5) a déjà été inséré et de faire ensuite glisser le système de fixation (1) vers le tuyau protecteur de sorte que le tuyau protecteur pénètre dans l'alésage de tuyau par son extrémité d'insertion,
le boîtier ayant au moins une partie de création de filetage hélicoïdal en prise (40) qui est disposée dans l'alésage de tuyau, ladite partie de création de filetage hélicoïdal en prise étant d'abord en prise avec la partie d'extrémité (11) du tuyau en plastique protecteur (10) lors de ladite entrée du tuyau en plastique protecteur dans l'alésage de tuyau (21) par son extrémité d'insertion (22) et ladite partie de création de filetage hélicoïdal en prise (40) étant conçue pour créer un filetage hélicoïdal (50) ayant un conducteur dans l'extérieur du tuyau en plastique protecteur (10) lors du vissage du système de fixation (1) sur la partie d'extrémité (11) du tuyau en plastique protecteur, de sorte que la face d'extrémité du tuyau en plastique protecteur (10) entre en contact avec la face d'extrémité en contact avec le tuyau (32) de l'élément d'étanchéité, lors de la poursuite dudit vissage, l'élément d'étanchéité compressible (30) étant comprimé et assurant l'étanchéité sur l'extrémité du tuyau en plastique protecteur (10),
**caractérisé en ce que**
la partie de création de filetage hélicoïdal en prise (40) a une section transversale asymétrique définie par un flanc de guidage à faible inclinaison (41), un sommet de crête (42) et un flanc de charge abrupt (43).

2. Système de fixation d'extrémité de tuyau en plastique protecteur selon la revendication 1, le sommet de crête (42) étant défini par un apex où le flanc de guidage (41) jouxte le flanc de charge (43), et le sommet de crête (42) s'étendant sur un segment d'une hélice.

3. Système de fixation d'extrémité de tuyau en plastique protecteur selon la revendication 1 ou 2, le flanc de charge (43) étant plus abrupt relativement à un plan perpendiculaire à l'axe de l'alésage de tuyau que le flanc de guidage (41).

4. Système de fixation d'extrémité de tuyau en plastique protecteur selon l'une quelconque ou plusieurs des revendications 1 à 3, le flanc de charge (43) étant à un angle compris entre 0 et 15 degrés relativement au plan perpendiculaire à l'axe de l'alésage de tuyau.

5. Système de fixation d'extrémité de tuyau en plastique protecteur selon l'une quelconque ou plusieurs des revendications 1 à 4, le flanc de guidage (41) étant à un angle compris entre 45 et 75 degrés relativement au plan perpendiculaire à l'axe de l'alésage de tuyau.

6. Système de fixation d'extrémité de tuyau en plastique protecteur selon l'une quelconque ou plusieurs des revendications 1 à 5, le boîtier (20) étant un boîtier en une partie comportant une seule partie de boîtier allongée en plastique rigide, la partie de boîtier allongée formant l'alésage de tuyau (21) avec son extrémité d'insertion (22) au niveau d'une extrémité axiale de la partie de boîtier, et la partie de boîtier allongée formant l'ouverture latérale adjacente à l'alésage de tuyau, et la partie de boîtier allongée ayant une paroi d'extrémité (24) au niveau d'une autre extrémité axiale de la partie de boîtier, ladite paroi d'extrémité étant pourvue d'un passage ouvert latéralement (25) en son sein pour l'objet allongé (5), une chambre de réception d'élément d'étanchéité ouverte latéralement (23) étant disposée entre ladite paroi d'extrémité et l'alésage de tuyau.

7. Système de fixation d'extrémité de tuyau en plastique protecteur selon l'une quelconque ou plusieurs des revendications 1 à 5, le boîtier étant un boîtier en deux parties ayant une première partie de boîtier à section semi-circulaire et une seconde partie de boîtier à section semi-circulaire, au moins une, de préférence chacune, des première et seconde parties de boîtier étant pourvue d'une partie de création de filetage hélicoïdal en prise respective.

8. Système de fixation d'extrémité de tuyau en plastique protecteur selon la revendication 7, les première et seconde parties de boîtier à section semi-circulaire pouvant être reliées le long de bords longitudinaux des parties de boîtier au moyen d'éléments de liaison du système de fixation, par exemple les première et seconde parties de boîtier à section semi-circulaire ayant chacune des nervures de liaison faisant saillie vers l'extérieur le long de leurs bords longitudinaux et les éléments de liaison étant conçus pour glisser sur deux nervures de liaison contiguës.

9. Système de fixation d'extrémité de tuyau en plastique protecteur selon l'une quelconque ou plusieurs des revendications 1 à 5, le boîtier étant un boîtier en trois parties ayant une première partie de boîtier extérieure (221) et une seconde partie de boîtier extérieure (222) ainsi qu'une partie de boîtier de création de filetage interchangeable (260),
les première et seconde parties de boîtier extérieures (221, 222) délimitant une chambre de réception (228) pour le montage interchangeable en son sein de la partie de boîtier de création de filetage (260),
la partie de boîtier de création de filetage ayant un corps (261) ayant une longueur axiale, une extrémité d'insertion de tuyau en plastique protecteur (263), et une seconde extrémité axiale opposée (264), ledit corps formant l'alésage de tuyau (262) et ayant une ouverture latérale (265) adjacente à l'alésage de tuyau,
la partie de boîtier de création de filetage (260) étant pourvue de ladite au moins une partie de création de filetage hélicoïdal en prise (40) disposée dans l'alésage de tuyau (262).

10. Système de fixation d'extrémité de tuyau en plastique protecteur selon la revendication 9, le système de fixation comprenant une première partie de boîtier de création de filetage interchangeable (260) et comprenant une seconde partie de boîtier de création de filetage interchangeable, la première partie de boîtier de création de filetage interchangeable étant conçue pour recevoir la partie d'extrémité d'un tube protecteur de premier diamètre extérieur et la seconde partie de boîtier de création de filetage interchangeable étant conçue pour recevoir la partie d'extrémité d'un tube protecteur de second diamètre extérieur, le premier diamètre extérieur étant différent du second diamètre extérieur, chacune des première et seconde parties de boîtier de création de filetage interchangeables étant conçue pour être reçue dans la chambre de réception délimitée par les première et seconde parties de boîtier extérieures.

11. Système de fixation d'extrémité de tuyau en plastique protecteur selon l'une quelconque ou plusieurs des revendications 1 à 10, la chambre (23) recevant l'élément d'étanchéité annulaire ayant une section conique (23b) éloignée de l'alésage de tuyau (21) et une section non conique (23a) dans laquelle l'élément d'étanchéité annulaire (30) est reçu à l'état non comprimé, de sorte que, lors d'un nouveau vissage, le tuyau protecteur (10) pousse l'élément d'étanchéité dans la section conique (23b) de la chambre (23), provoquant ainsi une compression accrue de l'élément d'étanchéité, au moins sur le ou les objets allongés (5) passant à travers l'élément d'étanchéité.

12. Procédé de montage d'un système de fixation d'extrémité de tuyau en plastique protecteur selon l'une quelconque ou plusieurs des revendications 1 à 11 au niveau d'une partie d'extrémité d'un tuyau en plastique protecteur dans lequel passe au moins un objet allongé, la personne réalisant l'installation poussant l'extrémité du tuyau en plastique dans un premier temps au-delà de la partie de création de filetage hélicoïdal en prise (40).

13. Procédé selon la revendication 12, la personne réalisant l'installation poussant l'extrémité du tuyau en plastique dans un premier temps au-delà de la partie de création de filetage hélicoïdal en prise directement en prise avec l'élément d'étanchéité, de sorte qu'aucun mouvement de vissage ne soit nécessaire pour établir un contact initial entre la face d'extrémité du tuyau et l'élément d'étanchéité, et de sorte qu'ensuite, pour la compression de l'élément d'étanchéité à un degré souhaité, la personne exécute un mouvement de vissage.
